(19)

**Europäisches Patentamt**
**European Patent Office**
**Office européen des brevets**

(11) **EP 2 046 063 A1**

(12) **EUROPEAN PATENT APPLICATION**

(43) Date of publication:
**08.04.2009 Bulletin 2009/15**

(51) Int Cl.:
**H04N 7/58** (2006.01)

(21) Application number: **07291191.0**

(22) Date of filing: **02.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Alcatel Lucent**
**75008 Paris (FR)**

(72) Inventors:
• **Sayadi, Bessem**
  **92330 Sceaux (FR)**
• **Leprovost, Yann**
  **91260 Nozay (FR)**

(74) Representative: **Vandenbroeck, Josiane Anne Marie et al**
**Alcatel - Lucent Bell NV**
**Copernicuslaan 50**
**B-2018 Antwerpen (BE)**

(54) **Method for rate control of multimedia streams and apparatus for performing this method**

(57)     A method and apparatus for controlling the rote of a plurality of encoded multimedia streams (data1, ..., datai,..., datan) to be multiplexed for further transmission on a transmission channel (C), are provided, the method including a step of receiving from the encoders of said multimedia streams (encoder1, ...,encoderi,..., encodern) auxiliary data (auxdatal, ..,auxdatai,..., auxdatan) related to the encoding process and to calculate from said auxiliary data and from a constraint related to the total available bandwidth of the transmission channel (C), adapted encoding parameters (cc1,..., cc i,..., ccn) for feedback to said encoders of said multimedia streams and is **characterised in that** , that the method includes an additional step of measuring respective user-related parameters (interest1,..., interesti,..., interestn) for each of the multimedia streams, and to use said respective user-related parameters (interest1,..., interesti,..., interestn) during the calculation of the adapted encoding parameters (cc 1, ...,cc i,... , cc n) for said multimedia streams.

**EP 2 046 063 A1**

**Description**

The present invention relates to a method for controlling the rate of a plurality of encoded multimedia streams to be multiplexed, said method including a step of receiving from the encoders of said multimedia streams auxiliary data related to the encoding process and to calculate from said auxiliary data and from a constraint related to the total available bandwidth of the medium following the multiplexing, adapted encoding parameters for feedback to said encoders of said multimedia streams .

Such a method is already known in the art, e.g. from the standard ITU-T J.180 (05/2000) entitled "User requirements for statistical multiplexing of several programmes on a transmission channel". Therein, on pages 3-4, in Appendix 1, a mechanism is described for controlling the bit rate of several encoded video streams by adjusting the appropriate encoding parameters in such a way that the more complex programmes will be allocated more bits than the less complex programmes. This scheme reduces the fluctuations of the picture quality within programmes and among the programmes transmitted in the same channel.

A drawback of this prior art method is that it fulfills only video-centric constraints. The prior art statistical multiplexing mechanism involves only spatial and temporal information of each program or video stream, without taking care about the importance of each program, with which is meant a criterion highlighting the end users preference, for example. This results in an inefficient use of the transmission medium as programmes not watched by any user, still receive the same bandwidth as those watched by a lot of them.

An object of the present invention is to provide a method of the above known type but which is more efficient with respect to user appreciation of the multimedia stream such as a video or audio stream, compared to the mentioned prior art method .

According to the invention, this object is achieved due to the fact that said method includes the steps as set out in the characterizing portion of the first claim.

In this way a dynamic statistical multiplexing method is obtained taking into aacount the different user's preferences. This mechanism is very helpful and useful for network operators and broadcasters to save bandwidth and accordingly satisfy a larger number of users by offering them a higher video or audio quality when it is possible.

A further characteristic feature of the present invention is shown in claim 2.

By individually measuring the instantaneous video or audio usage figures and by calculating from them respective rating parameters as explained in claims 3 and/or 4 program rating figures can be taken into account.

An additional characteristic feature of the present invention is shown in claim 5.

In this way a fair bandwidth allocation per user is provided.

The present invention relates as well to an apparatus for performing the aforementioned method, as set out in the claims 6 to 10.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

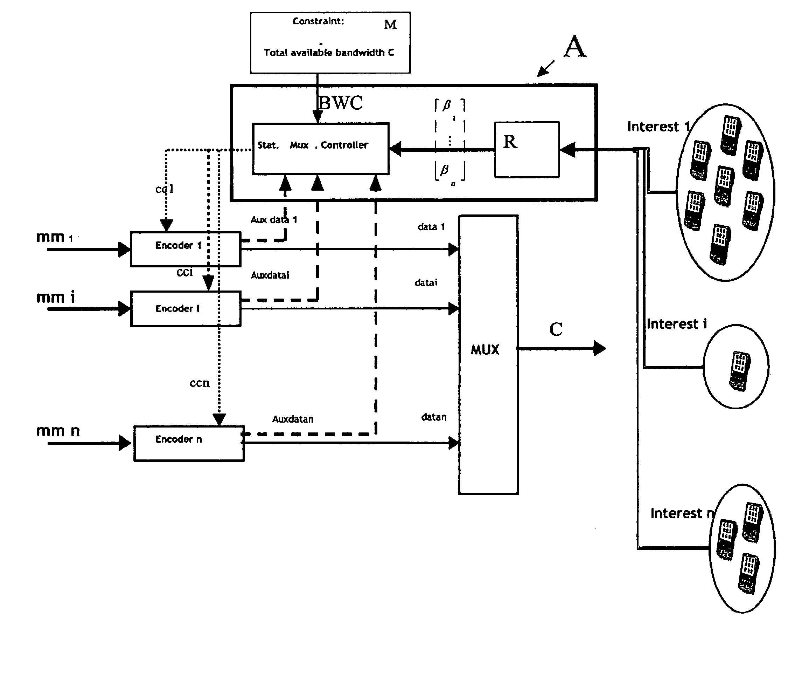

The above and other objects and features of the invention will become more apparent and the invention itself will be best understood by referring to the following description of an embodiment taken in conjunction with the accompanying drawing showing a schematic of an apparatus according to the invention.

The figure shows an apparatus A for controlling the rate of n encoded multimedia streams. The apparatus will be mainly described for video streams, but it is as well applicable to other multimedia streams such as audio streams, n-dimension encoded video stream , e.g. 3D video streams,... The multimedia streams, before being encoded, are denoted mm1,..., mmi,..., mmn. The respective encoders , for instance MPEG2 encoders in case of video streams, are denoted Encoderl,..., Encoderi,..., Encodern. However other types of video encoders may be used such as MPEG4, MPEG3, H264 AVC or SVC, H263... For the case of audio streams typical audio encoders as MP3 are possible, but other encoders such as WMA, DSS, MPEG4 AAC,...can also be used.

The respective encoded multimedia streams, as generated by the respective encoders, are denoted data1,..., datai,..., datan. These encoded streams are to be multiplexed in a multiplexer denoted MUX, for further being transmitted on a common channel C, for instance on a high-speed electrical or optical cable, or a wireless channel being a terrestrial link such us in DVB-T, DVB-T2, DVB-H, DVB-SH, DVB-H2, 3G/3G+, LTE, WiMAX systems, a satellite link such us in DVB-S, DVB-S2, DVB-SH.

To take into account the limited bandwidth of the communication channel C, a bandwidth allocation mechanism for each of the encoded video streams has to be provided. In the prior art this was provided by means of a Statistical Multiplexer controller, such as for instance the one described in the prior art Standard ITU-T J180 (05/2000). This device adjusts the appropriate encoding parameters of the respective encoders in such a way that the more complex programmes linked to the respective multimedia streams, will be allocated more bits than the less complex programmes. To this purpose this prior art device received from the respective encoders data related to the encoding process as such. Both in the prior art document and in the figure of this patent application, these data are denoted auxdatal,..., auxdatai,...auxdatan. These auxiliary data can for instance consist of a video quality indicator such us Peak to Signal Noise Ratio (PSNR), the distortion, or can be typical video compression parameters used in the encoders such us value of the quantization step. These parameters are obtained from the encoders such as H264 encoders. In case of audio streams, the auxiliary data can also consist of resulted distorsion, quantization step, and other encoding related parameters.

In the prior art situation, the statistical multiplexer controller device then calculated adjusted encoding parameters which directly influenced the rate with which the encoded video or audio streams were going to leave the encoders, based on these auxiliary data and on a total bandwidth constraint of the common communication channel C to be used for transmission after the multiplexer. This bandwidth constraint is a fixed number, provided by the operator of the common communication channel, and is initially provided. In the figure this bandwidth constraint value is denoted as BWC.

The apparatus A for controlling the rate of the encoded multimedia streams, according to the invention, is based upon this known prior art architecture of a statistical multiplexer controller, thus receiving auxiliary data, denoted auxdata1,..., auxdatai,..., auxdatan, from the respective encoders, and relating to the encoding process. In the embodiment depicted in the drawing the apparatus A of the invention therefore includes a device STM mainly having the function of a statistical multiplexing controller. The same auxiliary data as used in the prior art can be provided . Similarly, STM of the apparatus A also receives a total available bandwidth constraint BWC of the communication medium or channel C to be used after the multiplexing of the encoded video streams. This initial information can be stored in a separate memory, or in an internal memory of the apparatus. In the figure the situation of storage in a separate memory M is depicted.

Apart from these parameters, the apparatus A according to the invention is further adapted to receive user-related parameters, for each of the respective multimedia streams. In the figure these parameters are denoted interestl for multimedia streaml, and it is schematically shown as 7 users watching or listening to this stream. In the case of video streams where each video stream is usually linked to a separate TV program, this means that 7 users are watching TV program 1. Similarly only one user is shown to actively use stream i, so this information is provided by means of parameter interest i. And for multimedia stream n, 3 users are depicted to actively use this program.

This information can be provided to the apparatus A by means of uplink channels in case of unicast/multicast system such us WiMAX, 3G/3G+, LTE, or an adjacent cellular network useful in case of pure broadcast system such us DVB-H, DVB-H2, DVB-SH,.

This information is then further used by the apparatus A to calculate respective rating parameters, denoted $\beta1,...,\beta i,...., \beta n$. These rating parameters may be calculated by a device R, being separate from the statistical multiplexer controller STM, but in other embodiments the statistical multiplexer controller can be such as to include means for receiving the user-related parameters interestl to interestn, and means for calculating the rating parameters. These rating parameters can be calculated according to different methods. For the case of video streams, a first method calculates the rating parameter $\beta i$ for video stream i, which is linked to TV program i, according to the following simple formula (1) :

$$\beta_i = \left( \frac{number \ of \ users \ watching \ ith \ TV \ program}{Total \ number \ of \ active \ users} \right) \qquad (1)$$

Whereby with active users the total amount of users which are actually watching any of these streams mm1 to mmn, is meant, dus excluding the users not watching any of these streams.

However in another embodiment this rating parameter for video stream is calculated according to the following formula (2)

$$\beta_i = \max \left( Th_{min}, \frac{number \ of \ users \ watching \ ith \ TV \ program}{Total \ number \ of \ active \ users} \right) \qquad (2)$$

Wherein $Th_{min}$ denotes a minimum threshold value, being fixed by the operator to still enable the statistical multiplexing controller to guarantee a minimum quality for each video stream or TV program.

In the case of audio streams similar rating parameters can be calculated related to the ratio of users listening to an audio stream and the total number of users listening to any of these audio streams.

In general formula's (1) and (2) can be formulated as equations (3) and (4) :

$$\beta i = (\text{number of users actively using multimedia streami}) / (\text{total number of users actively using any of these multimedia streams}) \qquad (3)$$

and

$$\beta_i = \max\left(\text{Th}_{\min}, \frac{\text{number of users actively using multimedia streami}}{\text{Total number of users actively using any of these multimedia streams}}\right)$$

$$(4)$$

Actively using is then to be understood as selecting the multimedia stream to be transmitted to the user terminal equipment of the user.

Based on these respective rating parameters $\beta1$ to $\beta n$, calculated by the device R of the apparatus A, the adapted encoding parameters ccl to ccn are calculated. To this purpose a intermediate fairness function, named fair_audience is used, which, for the case of video streams consisting of a sequence of frames, calculates the allocated bandwidth for frame j of multimedia stream i based on the following formula (5) :

$$fair\_audience_i(j) = f(\beta_i(j),...,\beta_i(j-M))\frac{X_i(j)}{\sum_{i=1}^{n} X_i(j)} \qquad (5)$$

Where , $X_i$ denotes the complexity of the program i for frame j, that is, in the case of video streams, the amount of motion and still textures in the video stream i for frame j. The function $f(\beta(j))$ is a temporal filtering function which aims to limit the sudden variation of the value of $\beta_i(j)$. M denotes the number of filter's taps.

An example of such a filtering function is given by (6) :

$$f(\beta_i(j),...,\beta_i(j-M)) = \frac{1}{M}\sum_{k=0}^{M} \beta_i(j-k) \qquad (6)$$

This formula is also valid for audio streams case .

This fairness function fair_audience, is then used to calculate the adapted encoding parameters according to Xi expression. An example will be given for the quantization parameter Q which is used in MPEG2 encoders :

The fairness function thus depends on the complexity parameter denoted by Xi. The index i is related to the program. We can take for example the definition of complexity as described in MPEG-2 test model ("Test Model 5," *ISO/IEC JTC1/ SC29/WG11 N0400,* April 1993.) which is given by :

$$X_{ij} = b_{ij}Q_{ij} \qquad (7)$$

where $b_{ij}$ is the number of bits in picture j and $Q_{ij}$ is the average quantization parameter computed by averaging the actual quantization values used during the encoding of the all the macroblocks, including the skipped macroblocks.

Then using the definition of $X_{ij}$, the bitrate of program i ,denoted $R_i$ can be calculated for a Group of Picture display time interval as :

$$R_i = f(\beta_i(j),...,\beta_i(j-M))\frac{\sum_{j=1}^{Ni} b_{ij}}{\dfrac{N_i}{t_i}} = f(\beta_i(j),...,\beta_i(j-M))\frac{t_i}{N_i}\sum_{j=1}^{Ni}\frac{X_{ij}}{Q_{ij}} \qquad (8)$$

where $N_i$ is the number of picture in the GOP, $t_i$ is the frame rate of program i, M the number of filter's taps denoted by $f$.

In a statistical multiplexing we want to distribute bandwidth among the programs such that,

$$\sum_i R_i \le R_{total} \qquad (9)$$

where $R_{total}$ denotes the channel rate.

Then, for example, the ideal quantization parameter $Q_{ideal}$ can be derived by using equation (8) and (9) by setting the equality i.e. $R_{total} = \sum_i R_i$. We have, for example,

$$Q_{ideal} = \frac{1}{R_{total}}\sum_i f(\beta_i(j),...,\beta_i(j-M))\frac{t_i}{N_i}\sum_{j=1}^{Ni}X_{ij} \qquad (10)$$

in this specific example the adapted encoding parameter $Q_{ideal}$ provided from the apparatus to the respective encoders is thus the same for all encoders.

However for other encoding schemes this may be different, whereby for each encoder a different adapted encoding parameter will be supplied by the apparatus, as a person skilled in the art with video or audio encoding will know.

While the principles of the invention have been described above in connection with specific apparatus, it is to be clearly understood that this description is made only by way of example and not as a limitation on the scope of the invention, as defined in the appended claims.

**Claims**

1. Method for controlling the rate of a plurality of encoded multimedia streams (data1, ...,datai,..., datan) to be multiplexed for further transmission on a transmission channel (C), said method including a step of receiving from the encoders of said multimedia streams (encoder1, ...,encoderi,..., encodern) auxiliary data (auxdata1, ..,auxdatai,..., auxdatan) related to the encoding process and to calculate from said auxiliary data and from a constraint related to the total available bandwidth of the transmission channel (C), adapted encoding parameters (cc1,..., cc i,..., ccn) for feedback to said encoders of said multimedia streams
**characterised in that**
said method includes an additional step of measuring respective user-related parameters (interest1,..., interesti,..., interestn) for each of the multimedia streams, and to use said respective user-related parameters (interest1,..., interesti,..., interestn) during the calculation of the adapted encoding parameters (cc 1, ...,cc i,... , cc n) for said multimedia streams.

2. Method according to claim 1 **characterized in that** said respective user-related parameters (interest1,..., interesti,..., interestn) are obtained by measuring the respective instantaneous multimedia usage.

3. Method according to claim 1 wherein for each user i , said user-related parameters (interest1,..., interesti,..., interestn) are further used for calculating a respective rating parameter ($\beta i$) by means of the following formula: $\beta i$=(number of users actively using multimedia streami)/(total number of users actively using any of these multimedia streams).

4. Method according to claim 2 wherein for each user i, said user-related parameters are further used for calculating a rating parameter ($\beta i$) by means of the following formula :

$$\beta_i = \max\left( Th_{min}, \frac{\text{number of users actively using multimedia streami}}{\text{Total number of users actively using any of these multimedia streams}} \right)$$

with $Th_{min}$ denoting a minimum threshold value.

5. Method according to claim 3 or 4 wherein the adapted encoding parameters for multimedia stream i are calculated by multiplying said rating parameter for said multimedia stream i ($\beta i$) with the ratio of the complexity of said multimedia stream i and the sum of all complexities of all multimedia streams.

6. Apparatus (A) for controlling the rate of a plurality of encoded multimedia streams (data1, ...,datai,..., datan) to be multiplexed for further transmission on a transmission channel (C), said apparatus (A) being adapted to receive from the encoders of said multimedia streams (encoder1,..., encoderi,..., encodern) auxiliary data (auxdata1, ..., auxdatai,..., auxdatan) related to the encoding process and to calculate from said auxiliary data and from a constraint related to the total available bandwidth of the transmission channel (C), adapted encoding parameters (cc1,..., cci,..., ccn) for feedback to said encoders of said multimedia streams
**characterised in that**
said apparatus (A) is further adapted for receiving from the users of said multimedia streams, respective user-related parameters (interest1, ...,interesti,..., interestn) for each of the multimedia streams, and to use said respective user-related parameters during the calculation of the adapted encoding parameters (cc 1, ...,cc i,... , cc n) for said multimedia streams.

7. Apparatus (A) according to claim 6 **characterized in that** said respective user-related parameters (interest1, ..., interesti,..., interestn) are the respective instantaneous multimedia usages.

8. Apparatus (A) according to claim 7 wherein for each user i , said user-related parameters are further used for calculating a rating parameter ($\beta i$) by means of the following formula :

$$\beta i = (\text{number of users actively using multimedia streami})/ (\text{total number of users actively using any of these multimedia streams}) .$$

9. Apparatus (A) according to claim 7 wherein for each user i, said user-related parameters are further used for calculating a rating parameter ($\beta i$) by means of the following formula :

$$\beta_i = \max\left( Th_{min}, \frac{\text{number of users actively using multimedia streami}}{\text{Total number of users actively using any of these multimedia streams}} \right)$$

with $Th_{min}$ denoting a minimum threshold value.

10. Apparatus (A) according to claim 8 or 9 wherein the adapted encoding parameters for multimedia stream i (cci) are calculated by multiplying said user-related parameter ($\beta i$) for multimedia stream i with the ratio of the complexity of said multimedia stream i and the sum of all complexities of all multimedia streams.

Constraint: M

Total available bandwidth C

A

BWC

$\begin{bmatrix} \beta_1 \\ \vdots \\ \beta_n \end{bmatrix}$

Stat. Mux . Controller

R

Interest 1

cc1

mm 1 — Encoder 1 — Aux data 1 — data 1

CC1

mm i — Encoder i — Auxdatai — datai

Interest i

ccn

mm n — Encoder n — Auxdatan — datan

MUX — C

Interest n

EP 2 046 063 A1

**European Patent Office**

**EUROPEAN SEARCH REPORT**

Application Number

EP 07 29 1191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VAN BEEK P ET AL: "Adaptive streaming of high-quality video over wireless LANs" PROCEEDINGS OF THE SPIE, SPIE, BELLINGHAM, VA, US, vol. 5308, no. 1, 20 January 2004 (2004-01-20), pages 647-660, XP002312522 ISSN: 0277-786X | 1,6 | INV. H04N7/58 |
| Y | * abstract * <br> * paragraphs [0001] - [0005] * <br> * figure 1 * | 2-5,7-10 | |
| X | US 2006/095943 A1 (DEMIRCIN MEHMET U [US] ET AL) 4 May 2006 (2006-05-04) <br> * figures 6,15-17 * <br> * paragraphs [0051], [0052], [0078], [0082], [0094], [0095], [0098] - [0101] * <br> * paragraphs [0104] - [0106], [0114], [0120], [0131], [0154], [0177] * <br> * paragraphs [0188], [0240] * | 1,6 | |
| | | | **TECHNICAL FIELDS SEARCHED (IPC)** |
| Y | US 2002/194598 A1 (CONNELLY JAY H [US]) 19 December 2002 (2002-12-19) <br> * abstract * <br> * figures 1B,3,8,18,20 * <br> * paragraphs [0002], [0038], [0049], [0050], [0061], [0062], [0065] - [0067], [0069], [0071], [0081], [0087], [0088] * <br> * paragraphs [0108], [0115], [0116], [0123], [0129], [0132], [0134], [0135] * <br> * paragraphs [0139], [0141] - [0143] * <br> * claim 25 * | 2-5,7-10 | H04N |

-/--

The present search report has been drawn up for all claims

| Place of search | Date of completion of the search | Examiner |
|---|---|---|
| The Hague | 11 April 2008 | Beaudet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 29 1191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIMIN WANG ET AL: "Bit Allocation and Constraints for Joint Coding of Multiple Video Programs" IEEE TRANSACTIONS ON CIRCUITS AND SYSTEMS FOR VIDEO TECHNOLOGY, IEEE SERVICE CENTER, PISCATAWAY, NJ, US, vol. 9, no. 6, September 1999 (1999-09), XP011014614 ISSN: 1051-8215 * paragraph [III.A] * * figure 10 * ----- | 1,6 | |
| A | US 7 222 185 B1 (DAY MARK STUART [US]) 22 May 2007 (2007-05-22) * abstract * * figure 2 * * column 2, line 42 - column 3, line 14 * * column 5, line 62 - column 6, line 11 * * column 7, line 7 - line 37 * * column 7, line 66 - column 8, line 3 * * column 8, line 11 - line 61 * * claims 1,5,9-13 * * figure 3 * ----- | 2-5,7-10 | |
| A | WO 99/35852 A (KONINKL PHILIPS ELECTRONICS NV [NL]; PHILIPS SVENSKA AB [SE]) 15 July 1999 (1999-07-15) * abstract * * page 2, line 8 - line 23 * * page 3, line 16 - line 18 * * page 3, line 25 - line 28 * * page 4, line 1 - line 7 * * page 6, line 4 - line 8 * * page 6, line 11 - line 21 * * page 6, line 31 - page 7, line 4 * * page 7, line 13 - line 20 * * claims 1,4,6,10 * ----- -/-- | 1-10 | TECHNICAL FIELDS SEARCHED (IPC) |

The present search report has been drawn up for all claims

| Place of search | Date of completion of the search | Examiner |
|---|---|---|
| The Hague | 11 April 2008 | Beaudet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 07 29 1191

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAMAASHI K ET AL ASSOCIATION FOR COMPUTING MACHINERY: "USER-CENTERED VIDEO: TRANSMITTING VIDEO IMAGES BASED ON THE USER'S INTEREST" HUMAN FACTORS IN COMPUTING SYSTEMS. CHI '95 CONFERENCE PROCEEDINGS. DENVER, MAY 7 - 11, 1995, CONFERENCE ON HUMAN FACTORS IN COMPUTING SYSTEMS, NEW YORK, ACM, US, 7 May 1995 (1995-05-07), pages 325-330, XP000538462 ISBN: 0-201-84705-1 * the whole document * | 1,6 | |
| A | US 2005/028222 A1 (MEGEID MAGDY [CH]) 3 February 2005 (2005-02-03) * paragraph [0080] * * figure 7 * * claims 10,12 * | 1,6 | |
| A | EP 0 888 009 A (SONY CORP [JP]) 30 December 1998 (1998-12-30) * abstract * * page 3, line 8 - line 48 * * figure 3 * | 1,6 | TECHNICAL FIELDS SEARCHED (IPC) |
| A | WO 00/64174 A (DIVA SYSTEMS CORP [US]) 26 October 2000 (2000-10-26) * page 2, line 5 - line 6 * * page 2, line 14 - line 21 * * page 5, line 9 - line 18 * * page 7, line 16 - line 22 * * claims 1,14 * | 2-5,7-10 | |

The present search report has been drawn up for all claims

| Place of search | Date of completion of the search | Examiner |
|---|---|---|
| The Hague | 11 April 2008 | Beaudet, J |

EPO FORM 1503 03.82 (P04C01)

**ANNEX TO THE EUROPEAN SEARCH REPORT
ON EUROPEAN PATENT APPLICATION NO.**

EP 07 29 1191

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2008

| Patent document cited in search report | | Publication date | Patent family member(s) | | Publication date |
|---|---|---|---|---|---|
| US 2006095943 | A1 | 04-05-2006 | NONE | | |
| US 2002194598 | A1 | 19-12-2002 | CN | 1516972 A | 28-07-2004 |
| | | | EP | 1400119 A1 | 24-03-2004 |
| | | | JP | 2004537201 T | 09-12-2004 |
| | | | WO | 02104030 A1 | 27-12-2002 |
| US 7222185 | B1 | 22-05-2007 | NONE | | |
| WO 9935852 | A | 15-07-1999 | EP | 0963658 A2 | 15-12-1999 |
| | | | JP | 2001516546 T | 25-09-2001 |
| | | | US | 6104705 A | 15-08-2000 |
| US 2005028222 | A1 | 03-02-2005 | NONE | | |
| EP 0888009 | A | 30-12-1998 | DE | 69735307 T2 | 02-11-2006 |
| | | | WO | 9826599 A1 | 18-06-1998 |
| WO 0064174 | A | 26-10-2000 | AU | 4474500 A | 02-11-2000 |
| | | | CA | 2370538 A1 | 26-10-2000 |
| | | | GB | 2363692 A | 02-01-2002 |
| | | | US | 6718552 B1 | 06-04-2004 |
| | | | US | 2004226044 A1 | 11-11-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *User requirements for statistical multiplexing of several programmes on a transmission channel,* 3-4